(19) Europäisches Patentamt
European Patent Office
Office européen des brevets

(11) **EP 4 194 485 A1**

(12) **EUROPEAN PATENT APPLICATION**

(43) Date of publication:
**14.06.2023 Bulletin 2023/24**

(21) Application number: **22212643.5**

(22) Date of filing: **09.12.2022**

(51) International Patent Classification (IPC):
**C08H 1/00** *(2006.01)*    **C08J 5/18** *(2006.01)*
**C08L 89/00** *(2006.01)*    **C08K 5/053** *(2006.01)*

(52) Cooperative Patent Classification (CPC):
(C-Sets available)
**C08L 89/00; C08H 1/00; C08J 5/18; C08J 7/0427;**
C08J 2301/02; C08J 2389/00; C08J 2491/00

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.12.2021 LU 500975**

(71) Applicant: **Traceless Materials GmbH
20457 Hamburg (DE)**

(72) Inventor: **Lamp, Anne
20457 Hamburg (DE)**

(74) Representative: **Sonnenberg, Fred
Sonnenberg Harrison Partnerschaft mbB
Herzogspitalstraße 10a
80331 München (DE)**

(54) **PROCESS FOR PRODUCING A THERMOPLASTIC MATERIAL FOR USE AS A FILM OR AS A FLEXIBLE COATING**

(57)    A process for producing a thermoplastic material for use as a film or as a flexible coating, comprising the steps:

i. mixing a biomass containing prolamins, such as a grain source for a water insoluble fraction of a grain), having prolamins and lipids, and an organic solvent to obtain undissolved components and dissolved components comprising dissolved prolamin, lipids, and other dissolved components

ii. extracting said dissolved components into a first liquid phase and extracting undissolved components in a first solid phase under the following conditions:

a. maintaining temperature T below 80°Celsius, preferably below 75°C, most preferably below 70°C

b. maintaining dielectric constant $\varepsilon_r$ (at 25°C) between 30 and 42

c. maintain pressure level p at below 2 bar

d. performing extraction for no longer than an extraction time te (in min) = ke1 *T (in °C) + ke2* $\varepsilon_r$ (at 25°C) + ke3*p (bar absolute), wherein

ke1 is in the range between 0.04 and 1.00
ke2 is in the range between 0.08 and 2.00
ke3 is in the range between 1.70 and 60.00

iii. separating the first solid phase from the first liquid phase

iv. precipitating a first fraction of said dissolved components out of the first liquid phase to obtain a second solid phase and a second liquid phase under the following conditions:

a. a temperature drop during transforming the first liquid phase to the second liquid phase is provided for of at least 5°C, preferably at least 10°C, more preferably at least 15°C, at least 20°C, at least 25°C, at least 30°C, at least 35°C, at least 40°C, and most preferably at least 45°C.

b. maintaining dielectric constant $\varepsilon r$ (at 25°C) between 30 and 42

c. maintaining pressure level p at below 2 bar

(iv) separating the second solid phase from the second liquid phase

v. recovering said thermoplastic material from the second liquid phase by removing organic solvent under the following conditions:

- maintaining temperature of the prolamins below 80°C, preferably below 75°C, most preferably below 70°C

- maintaining a dielectric constant $\varepsilon_r$ (at 25°C) between 30 and 42

- maintaining a pressure level at below bar

- performing recovering for no longer than for no longer than a recovering time t (in min) = kr1*T (in °C) + kr2* (at 25°C) + kr3*p (bar absolute)

where

kr1 is in the range between 0.0004 and 12.0000
kr2 is in the range between 0.0008 and 67.0000
kr3 is in the range between 0.0167 and 80000.0000

EP 4 194 485 A1

Raw material

↓

Step 1

↓

Step 2

↓

Step 3

↓

Step 4

↓

Step 5

↓

Step 6

↓

Product

Figure 1

(52) Cooperative Patent Classification (CPC): (Cont.)

C-Sets
**C08L 89/00, C08K 5/053, C08L 91/00**

**Description**

This application claims priority of the Luxembourg application LU500975, filed on 9 December 2021, the entire content thereof being incorporated herein by reference.

The present invention relates to the field of biopolymers, in particular bio-based and bio-degradable thermoplastics. More specifically, the present invention primarily relates to a process for production of a thermoplastic material from a biomass containing prolamins, to the product obtained and the use of said product.

Most plastics today are made from fossil raw materials and are not biodegradable. The resulting environmental problems from plastic pollution are well known. The reason for the lack of biodegradability of conventional plastics, but also of many bioplastics, is that they are polymerized synthetically from monomers. The microorganisms in the environment have only a limited ability to break down these synthetically produced polymer chains. An alternative is the use of polymers that already exist in nature, such as starch, cellulose, lignin, or proteins, which can easily be degraded by nature's microorganisms.

To avoid conflict with food, these natural polymers should also be obtained from second-generation biomasses, such as residues from the agricultural industry. One example of such residues is corn gluten meal, a by-product from starch production that is obtained by corn wet milling. Corn wet milling is a two-stage process that includes a steeping process to soften the corn kernel and a wet milling process step that results in purified starch and corn gluten meal. Corn gluten meal is currently used as animal feed. But the nutritional quality of corn gluten meal protein, namely zein, is poor due to the limiting amount of essential amino acids. Instead, corn gluten meal can be used as a feedstock for the production of compostable films and paper coatings for use as a substitute for conventional plastic films or paper coatings.

Another example for such agricultural residues is brewer's spent grains, a by-product from beer production that is obtained as the solid leftover after starch liquification and that is currently used as animal feed. Instead, brewer's spent grains can be used as a feedstock for the production of compostable films and paper coatings for use as a substitute for conventional plastic films or paper coatings.

The basis of the usable fraction in these agricultural residues are prolamins, a protein type that is soluble in aqueous ethanol and that occurs in different grain types. The film-forming properties of prolamins are well known in the literature. Prolamin molecules have a hydrophobic surface and thus excellent intermolecular interaction properties and are at the same time water-repellent. They therefore have a high potential for material applications.

Zein is the prolamin fraction of corn protein. A production process to obtain purified and dried zein powder from corn is disclosed in WO 2016/154441 (A1) and EP 0 648 078 B1. The process is based on multiple extraction steps with 75 to 100 wt.% ethanol, water precipitation and subsequent solid liquid separation and drying. The purification aims to remove all fatty acids and pigments. Purified zein is available on the market, although it has a relatively high market price due to the extensive purification.

Standard methods for producing films, resins, or coatings from purified zein are known from US 663,520,6 B1, CN 101024725 B, US 5,585,060 A, US 5,324,351 A, US 2,285,758 A, CN 104397828 B, CN 1302550 A or CN 103382255 B. All these methods share the common concept that dry zein powder is mixed with aqueous ethanol and fatty acids. The latter is required because purified zein is very brittle and the addition of plasticizers is necessary in order to form a flexible film or resin. The mixture is then either poured into cold water to precipitate a mouldable resin.

Two staged processes for isolating zein are disclosed in SHUKLA ET AL: "Zein: the industrial protein from corn", INDUSTRIAL CROPS AND PRODUCTS, ELSEVIER, NL, vol. 13, no. 3, 1 January 2001 (2001 -01 -01), pages 171-192, XP002459554, ISSN: 0926-6690, DOI: 10.1016/60926-6690(00)00064-9 and in GB 492,599 A. These two stage processes aim at purifying the Zein by removing as much as possible oil and colour pigments.

The international patent application WO 01/83597 discloses a process for producing a corn zein resin article for use as a film, as a flexible coating. The process in WO 01/83597 comprises mixing commercially available zein with fatty acids. The process in WO 01/83597 comprises extracting and precipitating a first fraction of dissolved components out of a first liquid by adding cold water into the first liquid. The process in WO 01/83597 further comprises forming a zein resin sheet, and subsequently drying the zein resin sheet for further processing, such as grinding or pelletizing. The process comprises forming a zein resin article, where the forming step comprises extruding, blowing, or thermoforming. A disadvantage of the known methods is that they are not economically feasible in spite of being known for decades. This is because the methods either rely on food crops such as corn or on purified zein as starting material. Food crops are valuable resources and purified zein is costly. Moreover, the known methods rely on the removal of oil and color pigments requiring later addition of among others fatty acids as plasticizers, which once again increases the costs for the production of thermoplastics from or via zein. For these reasons, there are no thermoplastic products from corn, zein or corn gluten as thermoplastic alternatives for use in injection moulding, the production of films or coatings available on the market until today.

A primary problem to be solved by the present invention is the provision of a process for the production of a thermoplastic material, which at least partially overcomes the aforementioned disadvantages. In particular, it is an aim to provide a simple process for producing bio-based and bio-degradable thermoplastic material, which process is economically feasible, in particular cheap and operable on a large scale.

This problem is solved by the subject-matter of claim 1. Further aspects and preferred embodiments of the present invention are defined in the product and use claims as well as in the dependent claims and result from the following description, the appended examples and especially the appended further patent claims.

According to a first aspect of the present invention, a process for producing a thermoplastic material comprises the steps:

(i) mixing a biomass containing prolamins, with an organic solvent;
(ii) extracting solvent-soluble components of the biomass containing prolamins from the first solid phase into the first liquid phase;
(iii) subjecting the first liquid phase to precipitation to provide a second solid phase including a fraction of the solvent-soluble components and a second liquid phase depleted in the fraction of the solvent-soluble components; and
(iv) separating the second solid phase and the second liquid phase,
(v) recovering a thermoplastic material from the second liquid phase.

The invention is based on the innovation of the applicant that thermoplastic materials with different physicochemical properties can be formed from a single, cheap, biological by-product using simple process steps. The present invention thus reflects an integrated approach towards the production of different thermoplastic materials. The thermoplastic materials obtained by the process have desirable properties. In particular, the thermoplastic material has physicochemical and mechanical properties that render the material particularly suitable for being used as a flexible thermoplastic film in packaging or as a coating, or wet coating.

A further advantage of the present invention is that a fully bio-based and biodegradable thermoplastic material can be produced by the present invention. The thermoplastic material can be completely based on the biomass containing prolamins. This means, the biomass containing prolamins contains all constituents that are needed for producing the thermoplastic material having the advantageous properties described herein.

The term "biomass" should be understood as a biomass comprising at least 15 wt.% of carbohydrates or at most 50 wt. % of prolamins or at most 70 wt.% of proteins. As such the zein is not to be considered as biomass in the context of the present invention.

Another advantage of the invention thus includes the possibility to minimize addition of an additive and yet obtain a thermoplastic material with desirable properties. Accordingly, in certain embodiments of the invention, the amount of additives contained in the produced thermoplastic material is less than 25 % (w/w), preferably less than 20 % (w/w) relative to the total weight of the thermoplastic material.

In one embodiment, the amount of additives contained in the produced thermoplastic material is in the range between 3 % (w/w) and 35 % (w/w) relative to the total weight of the thermoplastic material, preferably between 5 % (w/w) and 25 (w/w), preferably between 5 (w/w) and 20 % (w/w), more preferably between 5 % (w/w) and 15 % (w/w) relative to the total weight of the thermoplastic material.

It should be understood that the process for producing a thermoplastic material according to the invention enables the obtention of a thermoplastic material without a step of adding any additive in the process.

In one embodiment, the process comprises a step of adding an additive. Adding an additive enables to improve the processability of the thermoplastic material. Surprisingly and contrary to commercial Zein (purified zein) the applicant has found with the process according to the invention the amount of additives is correlated to the processability. In other words, though the applicant considers additives to be optional, the addition thereof can be used to adjust processability.

In the present application, the melt volume rate MVR is given according to the DIN EN ISO 1133-1 and the dielectric constant according to DIN EN 60247. It is noted that the dielectric constant is accordingly indicated as if measured at 25°Celsius, even if the temperature in situ is of course different.

The present invention proposes a process for producing a thermoplastic material for use as a film or as a flexible coating, comprising the steps of mixing a biomass containing prolamins (grain source) or a water insoluble fraction of a biomass containing prolamins (grain), having prolamins and lipids, and an organic solvent to obtain undissolved components and dissolved components comprising dissolved prolamin, lipids, and other dissolved component; and extracting said dissolved components into a first liquid phase and extracting undissolved components in a first solid phase under the following conditions:

maintaining temperature T below 80°Celsius, preferably below 75°C, most preferably below 70°C
maintaining dielectric constant $\varepsilon r$ between 30 and 42 at 25°C
maintaining a pressure level p at below 2 bar
performing extraction for no longer than an extraction time te (in min) = ke1*T (in °C) + ke2* $\varepsilon r$ (at 25°C) + ke3*p (bar absolute), wherein ke1 is in the range between 0.04 and 1, ke2 is in the range between 0.08 and 2, and ke3 is in the range between 1.7 and 60.

The prolamin of the mixed biomass or of the water insoluble fraction of the biomass comprises initially fatty acids. The fatty acids present in the first step of the process can be fully recovered in the last step of the process.

In another example, the biomass can be pretreated before the mixing of the biomass with the organic solvent. The biomass according to the invention is not a fully purified biomass but contains unaltered structural composition of the prolamins.

There is substantially no loss or degradation of the fatty acids during the process of the present application. The fatty acids present in the first liquid phase of the process can be fully recovered in the last step of the process.

Maintaining the temperature T below 80°Celsius during the extraction prevents a structural change of the extracted components in the first liquid phase.

The temperature can be, for example, 25°C. A temperature below 10°C can, for example, result in an incomplete extraction of the dissolved components into the first liquid phase. The dissolved components that are not extracted stay on the applied substrate. Not all the thermoplastic material is recovered at the end of the process by maintaining the temperature below 10°C.

It is known that the dielectric constant is related to the polarizability of a substance. The dielectric constant is defined by the ratio of the electric permeability of the substance by the electric permeability of free space.

Maintaining the dielectric constant between 30 and 42 at 25 °C can be done by maintaining the organic solvent in a concentration range of 40 vol% to 90 vol%. The organic solvent can be in a concentration range of 45 vol% to 75 vol%, 50 vol% to 70 vol%, 50 vol% to 90 vol%, 70 vol% to 90 vol%, 55 vol% to 65 vol%, 55 vol% to 85 vol%, 60 vol% to 80 vol%, 65 vol% to 75 vol% or a combination thereof.

The organic solvent can be selected from one of ethanol or isopropanol.

Maintaining the dielectric constant $\varepsilon r$ between 30 and 42 during the extraction enables to change the fraction of the dissolved components in the first liquid phase. The dissolved components are, for example, fatty acids and proteins. Maintaining the dielectric constant below 30 or above 42 during the extraction does not enable to extract all the dissolved components into the first liquid phase. Not all the dissolved components are recovered at the end of the process by maintaining the dielectric constant below 30 or above 42.

Maintaining the pressure p below 2 bar prevents structural changes of the components extracted within the first liquid phase. During extraction and precipitation the main reason to set temperature in relation to pressure is to maintain the liquid phase as is. During recovering the pressure to maintain is to be understood as the pressure at the place of evaporation.

It should be noted that ke1, ke2 and ke3 are constants. ke1 is in the range between 0.04 and 1, preferably between 0.05 and 0.9, more preferably between 0.1 and 0.6, ke2 is in the range between 0.08 and 2.00, preferably between 0.1 and 1.5, more preferably between 0.4 and 0.9and ke3 is in the range between 1.70 and 60.00, preferably between 5 and 50, more preferably between 15 and 35.

The extraction time te can be chosen in the range between 10 minutes and 3 hours. Performing the extraction longer than the extraction time te may result in structural changes of components extracted within the first liquid phase. Not all the thermoplastic material is recovered at the end of the process if the extraction time te is short.

The process comprises further the step of separating the first solid phase from the first liquid phase and precipitating a first fraction of said dissolved components out of the first liquid phase to obtain a second solid phase and a second liquid phase under the following conditions: a temperature drop during transforming the first liquid phase to the second liquid phase is provided for of at least 5°C, preferably at least 10°C, more preferably at least 15°C, at least 20°C, at least 25°C, at least 30°C, at least 35°C, at least 40°C, and most preferably at least 45°C, maintaining dielectric constant $\varepsilon r$ between 30 and 42 at 25°C and maintaining pressure level p at below 2 bar.

The person skilled in the art knows that a temperature drop is the temperature difference between an initial temperature and a final temperature. Providing a temperature difference during the transformation of the first liquid phase to the second liquid phase of at least 5°C is part of the average knowledge of the person skilled in the art.

Diluting a substance with a solvent, for example water or ethanol, changes the dielectric constant of the substance. The organic solvent in the process of the invention is not diluted with any solvent, so the dielectric constant is not changed, respectively the dielectric constant is maintained during the process. The dielectric constant does not need to be actively controlled. The non-necessity of diluting the organic solvent with any solvent and the non-necessity of diluting the organic solvent with water enables to drastically reduce the operational costs of the process.

Maintaining the dielectric constant $\varepsilon r$ between 30 and 42 during the precipitation further enables to change the fraction of the extracted dissolved components in the second liquid phase. Changing the dielectric constant to be below 30 or above 42 during the process results in a restructuration of the extracted dissolved components, for example of the proteins. The restructuration results in the precipitation of the dissolved components. The precipitation of the dissolved components is unfavourable for producing the thermoplastic material for use as a film or as a flexible coating.

M.J. Lewis discloses in the chapter "Solids separation processes" in "Separation Processes in the Food and Biotechnology Industries" dated 1 January 1996 that water is the simplest extractant to extract protein. M.L.

Lewis discloses that the pH of water is adjusted to be well away from the isoelectric point of the protein, which is in the region of pH 4 to 5 for many proteins. The person skilled in the art, based on the teaching of the prior art, would have been encouraged into adding water in the step of extraction of the process, on the contrary of the present patent application.

The present invention therefore teaches away from prior art process such as the process described in the international patent application WO 01/83597, in which a first fraction of dissolved components is precipitated out of the first liquid phase by adding cold water into the first liquid phase. Indeed, adding cold water into the first liquid phase results in an increase of the dielectric constant above 42. Adding the cold water leads therefore to the precipitation of the dissolved components in the first liquid phase.

In addition, the process of the international patent application WO 01/83597 further describes adding a solvent, for example aqueous ethanol, to the organic solvent of the international patent application WO 01/83597. The international patent application WO 01/83597 encourages the addition of a further solvent to the organic solvent to facilitate extruding the material of the international patent application WO 01/83597.

It should be noted that maintaining the dielectric constant between 30 and 42 can be done by maintaining the ethanol concentration in the range of approx. 40 vol% to 90 vol%. The organic solvent can be in a concentration range of 45 vol% to 75 vol%, 50 vol% to 70 vol%, 50 vol% to 90 vol%, 55 vol% to 65 vol%, 55 vol% to 85 vol%, 60 vol% to 80 vol%, 65 vol% to 75 vol% or a combination thereof.

The process further comprises the step of separating the second solid phase from the second liquid phase, and of recovering said thermoplastic material from the second liquid phase by removing organic solvent under the following conditions:

maintaining temperature of the prolamins below 80°C, preferably below 75°C, most preferably below 70°C, maintaining a dielectric constant between $\varepsilon r$ = 30...42 at 25°C, maintaining a pressure level at below 2 bar, performing recovering for no longer than a recovering time t (in min) = kr1*T (in °C) + kr2* $\varepsilon$ (at 25°C) + kr3*p (bar absolute), where kr1 is in the range between 0.0004 and 12.0000, kr2 is in the range between 0.0008 and 7.00000, and kr3 is in the range between 0.0167 and 80000.0000.

It should be noted that kr1, kr2 and kr3 are constants. kr1 is in the range between 0.0004 and 12, preferably between 1 and 10, more preferably between 2 and 5, kr2 is in the range between 0.0008 and 7, preferably between 1 and 6, more preferably between 2 and 5, and kr3 is in the range between 0.0167 and 80000, preferably between 1 and 70000, more preferably between 10000 and 60000.

It is to be noted that such parameters have been obtained by intense research and are a clearly motivated choice and cannot be assumed to have been previously applied, even if in some prior art documents products made from commercial Zein are allegedly exhibiting thermoplastic characteristics. Indeed, in the prior art there is no evidence that the products made from commercial Zein could exhibit thermoplastic characteristics, at least not in a way to be suitable for any industrial application. This can also be seen from the comparative examples discussed further below.

The recovering time t can largely vary depending on the used drying/recovering technology and would be for example in the range between 30 minutes and 15 hours when using a standard oven.

Most surprisingly the process as described results in thermoplastic materials having unique properties, that could not be obtained previously. In full contrast the unique characteristics appear to be linked both to the folding of the prolamin and the lipid and the obviously existing interaction between these components. Only by following the process steps and parameters indicted allows to arrive at thermoplastic material that can be used to make suitable films and coatings, either by extrusion or by dissolving obtained powder and/or granulate, made according to the inventive process.

The biomass containing prolamins can be a grain source for example a corn. The water insoluble fraction of a grain could be for example a corn gluten forming an example of a biomass containing prolamins.

During the step of precipitating a first fraction of said dissolved components out of the first liquid phase to obtain a second solid phase and a second liquid phase, a temperature drop of 70-75°C allows obtaining good flexibility and homogeneity, with a final temperature in the range of -15 to -20°C, but already at a drop of 45°C the first substances precipitate. In the recovering of the thermoplastic material step, the temperature of the prolamins is kept below 80°C. This does not mean that the drying/recovering temperature cannot be higher, but only that the temperature arriving at the prolamins should be < 80°C. For example, the drying/recovering step can be performed by spray drying with air temperature of 120°C, but only approx. 80°C arrives at the prolamins because of the evaporation cold. Vacuum drying can also be performed.

In the precipitation step, the flakes must be as large as possible in order to achieve a good solid-liquid separation.

In the present description, thermoplastic properties are measured and defined by the melt volume rate MVR. Materials that do not have thermoplastic properties cannot be melted, so they cannot be measured in the MVR measurement. Additionally materials that cannot or only be hardly be extruded are considered to have insufficient thermoplastic properties.

The present invention allows when using subsequent extrusion to create granulates to obtaining films, coatings or granulate qualities with MVR values 1 and 200 cm3/10 min (5kg, at 100 to 150°C), depending on the amount and type of additive added.

In an aspect, the prolamins have naturally grown prolamin structures and distributions and the lipids have naturally grown lipid content and distributions.

In a further aspect, the process comprises at least partly removing said other dissolved components other than prolamin and lipids from the first liquid phase and/or from the second liquid phase. The removal may comprise filtering, by membrane filtration, the first liquid phase or the second liquid phase, said filtering being performed under the following conditions: maintaining temperature below 80°C, preferably below 75°, most preferably below 70°C, even more preferably below 40°C, maintaining dielectric constant between $\varepsilon r$ between 30 and 42 at 25°C, and maintaining a pressure level below 7 bar. The filtration can be a two-stage filtration, wherein the first filter stage is a filtration with a first membrane with a size comprised between 4 and 10 kg/mol, and the second filter stage is a filtration with a second membrane with a size comprised between 0.2 and 1.0 kg/mol.

The removal of the dissolved components other than the prolamin and the lipids from the first liquid by filtration is optional. It has to be noted that the process does not need the step of filtration to recover the thermoplastic material.

The first filter stage is a filtration with a first membrane for retention of prolamins, and the second filter stage is a filtration with a second membrane for retention of the lipids.

Preferably the filtering reduces the content of odor agents and color pigments.

A two-step filtration allows to recover first the prolamins with the larger membrane size, and then in a second step the fatty acids with a smaller pore size. Accordingly, the prolamin and fat compositions and distributions do not change.

It should be understood that dislocation of the ratio of lipids can occur in membrane separation if membrane pore sizes are used that let some lipid components pass while holding back other lipid components. If lipids are held back in membrane filtration, then first the larger lipids will be held back, in the molecular size order, i.e. triglycerides, diglycerides, monoglycerides and free fatty acids. The removal of lipids from the prolamins in membrane separation can occur if the pore sizes are too big so that all lipids can pass the membrane while prolamins are held back.

If too much solvent is removed, e.g., so that the dry matter content of the first liquid gets too high, approx. >30% dry matter content, the prolamins undergo structural changes and form an irreversible non-structural network.

If the pressure during filtration is too high (>10 bar), prolamins denature and form an irreversible non-structural network.

Filtration is even better performed at even lower temperatures, e.g., <40 °C, because then the risk of structural changes is lower.

The filtration is not mandatory in the process.

In one aspect, the first liquid phase and or the second liquid phase is treated to increase viscosity. The main purpose is to increase the dry matter content in order to have to evaporate less solvent in the subsequent drying/recovering step (more economical). This automatically leads to an increase in viscosity.

The primary structure of the protein is the amino acid sequence of the protein, and the secondary structure is formed by the formation of hydrogen bonds between the C=O and N-H groups of the peptide bonds. A distinction is made between the helix (right-twisted spiral shape) and the $\beta$-sheet (planar zigzag configuration). In one aspect of the process, a ratio between alpha helix and beta-sheet in the secondary structure is maintained at throughout the entire process, preferably at the ratio in the corn gluten meal, most preferably at a ratio of at least 1.6. In particular the ratio between alpha helix and beta-sheet in the dried first liquid phase is of 2,0, the ratio between alpha helix and beta-sheet in the dried second liquid phase is of 1,9. A ratio between alpha helix and beta-sheet in corn gluten meal is 1,6.

Therefore, during extraction process of the present invention, the content in alpha helix increases during extraction. During precipitation, unwanted prolamins are removed that contain a high amount of random coils and beta turns and only the valuable prolamins are kept that contain alpha helices and beta sheets. This is advantageous because a higher ratio of $\alpha$-helix is favorable for good thermoplastic properties. On the other hand, water precipitation would otherwise decrease the amount of alpha helix and increases the amount of beta sheet, because a ratio between alpha helix and beta-sheet in first/second liquid phase precipitated in water is of 0,7. The $\alpha$-helix is a right-handed spiral with an average of 3.6 amino acid side chains per turn. The distance between the amino acid side groups is the reason why amino acids that are three or four places apart in the primary structure are in close proximity in the helical structure. The $\alpha$-helix is stabilized by hydrogen bonding.

The peptide bonds of several chains interact with each other and form hydrogen bonds along the polypeptide backbone, forming a beta sheet. These occur in pairs of two at a distance of 7.0 Å and provide the stability of the structure. The distance between vicinal amino acids is significantly larger in the leaflet with 0.35 nm than in the $\alpha$-helix with 0.15 nm. Measurement: FTIR analysis

The stretching vibration of C=O in the peptide bonds (1620-1700 cm-1 in FTIR spectrum) is related to its secondary structures, where the $\alpha$-helix structures adsorb at 1650-1660 cm-1 and the $\beta$-sheets adsorb at 1620-1640 cm-1.

In an aspect, the process further comprises the step of adding additives before the step of recovering the thermoplastic material, preferably before the drying/recovering, wherein the additives can be chosen among fatty acids, polyols, phenolic compounds, aromatic compounds, sugars, or others. It should be noted that no additive which is harmful to humans, or the environment is used.

In one example, the additives are chosen among carboxylic acids. The polyol is in a further example glycerol. The Applicant surprisingly found that conducting the process with parameters as defined in the claims results in better results in terms of processability and quality of the thermoplastic material obtained. The optional additives can be used to adjust processability, and it has been found that most surprisingly and contrary to commercial Zein a relationship between the amount of additives and the processability could be observed.

Adding an additive enables to improve the processability of the thermoplastic material.

In one embodiment, the amount of the added additives is in the range between 3 % (w/w) and 35% (w/w) relative to the total weight of the thermoplastic material, preferably between 5 % (w/w) and 20 % (w/w), more preferably between 5 % (w/w) and 15 % (w/w) relative to the total weight of the thermoplastic material. It should be understood that, throughout the process, the prolamin's secondary structures are kept in a way which has good ability to interact with lipids, especially fatty acids. In addition, there are already natural fatty acids inside the prolamins, which are already embedded between the prolamin chains. Therefore, the recovered prolamins are able to melt, because they have the required structure to interact with the free fatty acids (FFA), and it contains natural FFA.

By adding more additives, the extrudates after thermoplastic processing have even higher flexibility. Also, through addition of additives, the MVR can be increased even more, meaning a lower melt viscosity, which is required for some applications.

Ghanbarzadehb et al. in "Thermal and mechanical behavior of laminated protein films", JOURNAL OF FOOD ENGINEERING, ELSEVIER, AMSTERDAM, NL, vol. 90, no. 4, 1 February 2009 (2009-02-01), pages 517-524, further discloses that water is a type of plasticizer widely used in the process of polymeric films. Ghanbarzadehb et al. further discloses that water is a low molecular weight component that increases free volume and thereby allows increased backbone chain segmental mobility, which in turn produces structural relaxation at a decreased temperature. It is therefore general knowledge to add additives in a process of forming protein based films often water is added in the process, thus changing the dielectric constant. The process of the present invention in contrast maintains the dielectric constant when applying the parameters as claimed. Additives can be added as an optional component, but the parameters as claimed need to be respected.

In a further aspect, the ratios among the lipids/fatty acids are maintained throughout the entire process at the following levels in wt.-% of total lipids, given in the following order: free fatty acids / monoglycerides / diglycerides / triglycerides: 91/3/5/1 in the first liquid. The ratio in corn gluten meal is of 84/3/8/4 and in commercial Zein.

By adding more additives, the extrudates after thermoplastic processing have even higher flexibility. Also, through addition of additives, the MVR can be increased even more, meaning a lower melt viscosity, which is required for some applications.

In a further aspect, the ratios among the lipids/fatty acids are maintained throughout the entire process at the following levels in wt.-% of total lipids, given in the following order: free fatty acids / monoglycerides / diglycerides / triglycerides: 91/3/5/1 in the first liquid phase, and 95/2/3/0 in a second liquid phase. The ratio in corn gluten meal is of 84/3/8/4 and in commercial Zein: 54/9/26/11. This is advantageous to have high free fatty acid content, it increases the flexibility in films, and it enhances the thermoplastic properties by resulting in a higher MVR. It is to be noted that these ratios are dependent on the initial biomass and might therefore deviate.

Maintaining ratios among the lipids/fatty acids is controlled by adjusting the dielectric constant in order to overcome changes of the lipid distribution in the grain source material as an example of biomass containing prolamins.

The content of lipids with respect to the dry mass is preferably maintained throughout the process to be above 4 percent in weight, preferably between 4 and 23%.

In one embodiment, the content of lipids with respect to the dry mass is below 4 percent in weight.

The present invention also proposes a process of forming a flexible film, or a coating on a flexible material such as paper, comprising the steps of providing a thermoplastic material by a described process above and forming the flexible film or the coating. The flexible film is obtained by at least one of wet casting, i.e., re-solubilized powder in ethanol, or extrusion casting, for thermoplastic processing of granulate, and and/or the coating is obtained by at least one of wet casting on paper by roll-to-roll coating, i.e., re-solubilized powder in ethanol, or co-extrusion on paper, for thermoplastic processing of granulate).

The present invention also proposes a thermoplastic product obtained from biomass containing prolamins such as from a grain source or a water insoluble fraction of a grain having prolamins and lipids, in particular resulting from a process described above, yielding: at a melt volume rate of between 2 and 200 cm3/10 min (5kg, at 100... 150°C).

The present invention also proposes the use of a thermoplastic product obtained from biomass containing prolamins such as from a grain source or a water insoluble fraction of a grain having prolamins and lipids, in particular a product as defined above or resulting from a process as described above as a film or as a coating on a flexible support, in particular a paper-coating.

Further aspects, embodiments and advantages of the present invention become apparent from the following detailed description, the examples, the figures and the claims, which follow after the brief description of the drawings.

In the drawings:

Fig. 1 illustrates a process scheme of an integrated process for the production of different thermoplastics according to an embodiment of the present invention.

Fig. 2 illustrates a process scheme of an integrated process for the production of different thermoplastics according to another embodiment of the present invention.

Fig. 3 illustrates the fraction of saturated, monosaturated and polyunsaturated fatty acids among the fatty acids for materials produced with no step of precipitating the first fraction of dissolved components out of the first liquid phase to obtain the second solid phase and the second liquid phase. Fig. 3 also illustrates the fraction of saturated, monosaturated and polyunsaturated fatty acids among the fatty acids for materials produced with the step of precipitation and with a temperature drop during transforming the first liquid phase to the second liquid phase of at least 5°C.

Fig. 4 shows the tensile strength and the elongation at break of the thermoplastic material.

Fig. 5 shows a curve of the dielectric constant as a function of the concentration of ethanol.

Fig. 6 is a table of characteristics for different illustrative and comparative materials.

Fig. 7A, 7B, 7C, 8A, 8B, 9A, 9B, 10A, 10B, 10C, 11A, 11B, 12A, 12B, 13A, 13B and 14 show images of the materials produced.

The process according to the present invention produces a thermoplastic material with good physicochemical and mechanical properties from a corn gluten source. A thermoplastic material as understood herein means a material that comprises all constituents required for being formed into a (flexible) film or a (flexible) coating. In some embodiments, all constituents of the thermoplastic material stem from the corn gluten source and no external constituents are added. In some embodiments, the thermoplastic material additionally comprises external constituents.

The term "flexible thermoplastic material" denotes a thermoplastic material that can be used as a flexible film or coating. In contrast, the term "rigid thermoplastic material" refers to a thermoplastic material, which can be formed into a rigid thermoplastic article.

The thermoplastic materials are a class of materials that can be softened and melted by the application of heat and can be processed in the heat-softened state, e.g., by extrusion and injection moulding. The thermoplastic materials can be remoulded and recycled without negatively affecting the thermoplastic materials physical properties.

The organic solvent may comprise a mixture of two or more organic solvents, or a mixture of at least one organic solvent and an aqueous solvent such as water. The amount and type of organic solvent(s), and optionally the amount and type of the aqueous solvent, are selected so that the resulting composition (i.e., the first liquid phase) is capable to serve as an extracting solvent for certain components of the corn gluten source (herein referred to as the solvent-soluble components).

The primary aim of the extraction of the solvent-soluble components is to obtain a liquid phase (herein referred to as the first liquid phase), which is enriched in thermoplastic forming components, in particular in corn gluten proteins and lipids, and depleted in fibres.

Accordingly, the solvent is preferably selected based on its capability of dissolving prolamins, and lipids, in particular fatty acids. It is further preferred that the solvent does not dissolve fibres to a substantial extent.

In preferred embodiments, the organic solvent is selected from the group consisting of aprotic polar organic solvents, protic organic solvents, and mixtures thereof. Preferably, the organic solvent is selected from the group consisting of alcohol, ketones, and mixtures thereof. More preferably, the organic solvent is selected from the group consisting of monovalent alcohols containing 1 to 6, 1 to 5, 1 to 4, or 1 to 3 carbon atoms, and mixtures thereof. Most preferably, the organic solvent is selected from the group consisting of ethanol, isopropanol, and mixtures thereof.

According to one embodiment, the solvent may be an aqueous phase comprising ethanol in an amount of 50 to 90 %, preferably 55 to 85 %, more preferably 60 to 80 %, most preferably 65 to 75 % (v/v). Thereby, it is ensured that the ethanol content is close to the optimum, which has been determined to be 70 % (v/v).

According to another embodiment, the solvent may be an aqueous phase comprising isopropanol in an amount of 40 to 80 %, preferably 45 to 75 %, more preferably 50 to 70 %, most preferably 55 to 65 % (v/v). The optimal isopropanol content has been determined to be 60 % (v/v). The preferred ranges have thus been selected for being close to the optimal isopropanol content.

With respect to other solvents or solvent combinations that are useful in the context of the present invention, one may consider solvents having a similar logP value as ethanol, isopropanol, or as the resulting first liquid phase comprising ethanol or isopropanol in the above amount. Moreover, one may take into account the solvents' tendency of dissolving desired components, namely prolamin, while not dissolving not desired components, as explained above.

As mentioned above, the solvent-soluble components of the biomass containing prolamin such as corn gluten source are extracted from the first solid phase into the first liquid phase. The term "solvent-soluble components" denotes one or more components, which are soluble in the first liquid phase under the conditions applied during the extraction. The components comprise corn gluten proteins, preferably zein, and corn gluten lipids, preferably fatty acids. By extracting both corn gluten proteins and lipids, a thermoplastic material can be produced without having to add external fatty acids or another plasticizer to obtain the elasticity required for e.g., a thermoplastic film.

The extraction may be carried out at ambient temperature, e.g., around 20°C. In preferred embodiments of the present invention, the extraction involves heating and/or mixing. Thereby, the process step can be accelerated, and its yield increased. For example, the extraction may be carried out at a temperature of at least 25°C, preferably at least 30°C, more preferably at least 40°C, more preferably at least 50°C, most preferably at least 55°C. In terms of power consumption, it may be advisable to limit the maximum temperature. Accordingly, the extraction is preferably carried out at a temperature of at most 80°C, preferably at most 75°C, more preferably at most 70°C, more preferably at most 65°C, most preferably at most 60°C.

The dielectric constant $\varepsilon r$ is maintained between 30 and 42 at 25°C by maintaining the concentration of the organic solvent between 40 and 90 vol.%, preferably 70 and 90 vol.%.

For example, the organic solvent can be isopropanol at a concentration of 40 to 85 vol.%. In another example, the concentration of isopropanol is 60 to 85 vol%. In a further example, the organic solvent is ethanol at a concentration of 60 to 90 vol.%., preferably 70 to 90 vol.%.

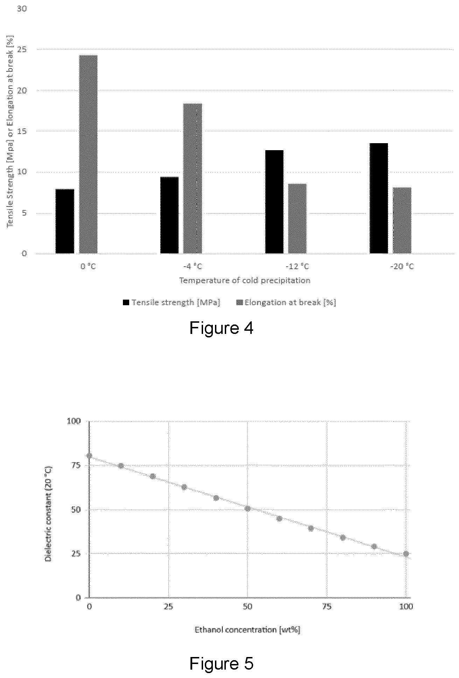

Figure 5 illustrates a curve of the dielectric constant (at 25°C) as a function of the concentration of ethanol as used in the present disclosure. A linear regression of the curve can be seen on Figure 5.

The duration needed for extraction is not particularly limited and may generally range between 1 or several minutes, e.g., 5 minutes, and 24 hours.

In one embodiment, the duration needed for extraction is between 10 min and 3 hours.

The first solid phase and the first liquid phase are separated. This can be achieved by removing the first solid phase (including solvent-non-soluble components of the corn gluten source) from the first liquid phase by solid-liquid separation, preferably by centrifugation, filtration, decantation, sedimentation, or a combination thereof.

Most surprisingly the applicant has found that adjusting the dielectric characteristics of the solvent allows to arrive at suitable thermoplastic material having high suitability for further processing such as injection moulding. Indeed, the applicant has found that best further processing is available if a major part of the prolamins, substantially all the prolamins are kept in the naturally grown structure and interaction with the originally present lipids, possibly with optional further additives. This is in contrast to the teachings in the prior art during manufacturing of commercial Zein, where in at least one step water is added to the dissolved Zein on purpose. The prior art discloses adding water in the process for zein recovery. Therefore, the prior art encourages the person skilled in the art to precipitate zein in water, therefore, changing the prolamins naturally grown structure. The prior art also discloses that water is a preferred compound and should be added as an additive to reach advantageous properties. Hence the prior art generally suggest to change the dielectric constant during the manufacturing process. It is therefore surprising that a process for producing a thermoplastic material for multiple possible use for injection molding, as a film or as a flexible or non-flexible coating results in clearly different products as to processability by respecting the parameters as claimed and in particular by maintaining the dielectric constant unchanged.

Accordingly, in the process of the present invention, the dielectric properties of the first liquid is adjusted to keep fatty acids in the first liquid phase. Hence, the desired dissolved components will remain in the liquid phase, whereupon one can optionally perform filtration. This approach is in full contrast to the known processes, always aiming at reducing oil content and to recover all of the prolamin.

This is in contrast to the teachings in the prior art during manufacturing of commercial Zein, where in at least one step water is added on purpose. The prior art discloses that water is the simplest extractant. Therefore, the prior art encourages the person skilled in the art into adding water in the step of extraction. The prior art discloses also that water is a preferred compound and should be added as an additive to reach advantageous properties. It is therefore surprising to develop a process for producing a thermoplastic material for use as a film or as a flexible coating without comprising a step of adding (additional) water, at least before the thermoplastic material has been realised and/or during any situation where solvent is also present.

Indeed, the applicant has found that the characteristics of prolamin having the initial lipids and in particular fatty acids shows much better properties as compared to prolamin from which fatty acids have been extracted. This has proven even more true if the structure of the prolamin has not been altered, such as in zein.

Second alternative

Subjecting the first liquid phase to precipitation, The purpose of the precipitation step, which follows thereafter is to adjust the composition, in particular the amount of the corn gluten prolamins relative to the amount of the corn gluten free fatty acids, so that a thermoplastic material with the desired properties can be recovered. The higher the ratio of the corn gluten free fatty acid content to the corn gluten prolamin content in the recovered thermoplastic material, the higher its elasticity and its MVR, and vice versa. Depending on the desired properties, the conditions are altered so that the solubility limit of certain solvent-soluble components is exceeded and a fraction of the solvent-soluble components precipitates, forming the second solid phase. The remaining liquid, i.e., the second liquid phase, contains an accordingly depleted content of solvent-soluble components.

According to a preferred embodiment of the invention, the precipitation in step (iii) involves cooling of the first liquid phase (also referred to herein as cold precipitation). As a result of the cold precipitation, a flexible thermoplastic material can be recovered from the second liquid phase. It is believed that cooling results in conditions that lead to precipitation of small amounts of the solvent-soluble components. Further, the conditions are believed to favour precipitation of the corn gluten lipids over the corn gluten protein so that the ratio of the corn gluten protein amount to the corn gluten lipid amount in the second liquid phase is increased as compared to the ratio in the first liquid phase. In this way, the remaining lipid concentration is relatively high to yield an elastic thermoplastic material. It is important to notice that free fatty acid content can be increased verry surprisingly using cold precipitation.

Suitable cooling temperatures can be readily determined by a person skilled in the art. Preferably, the cooling results in a temperature drop of the first liquid phase of at least 5°C, preferably at least 10°C, more preferably at least 15°C, at least 20°C, at least 25°C, at least 30°C, at least 35°C, at least 40°C, and most preferably at least 45°C. Preferably, the cooling results in a temperature of the first liquid phase of 5°C or less, preferably 0°C or less, more preferably -10°C or less, most preferably -20°C or less.

The duration needed for cold precipitation is not particularly limited and may generally range between several minutes and several hours, for instance between 15 minutes and 32 hours.

Thereafter, the second solid phase and the second liquid phase are separated. This can be achieved by solid-liquid separation, preferably centrifugation, filtration, decantation, sedimentation, or a combination thereof.

After separation of the second solid phase and the second liquid phase, a flexible thermoplastic material can thus be recovered from the second liquid phase. As mentioned above, if it is intended to produce a thermoplastic material, a material with best properties is obtained when cold precipitation is carried out as the precipitation step. Afterwards, the thermoplastic material can be further processed to yield a flexible thermoplastic film, a thermoplastic coating as disclosed herein.

Another aspect of the present invention pertains to a process for producing a thermoplastic film or a thermoplastic coating, comprising the steps of providing a thermoplastic material by a process as disclosed herein and forming the thermoplastic material into the thermoplastic film or the thermoplastic coating. The thermoplastic film can be obtained by extrusion casting the thermoplastic material into a film. The thermoplastic coating can be obtained dissolving the powder or granulate and subsequent casting.

The various features and embodiments described in the context of the methods of the invention shall be understood to define corresponding features and embodiment of the apparatus of the invention, and vice versa.

Although, the quality of the obtained thermoplastic material is hardly explainable the applicants assume that maintain the specific process parameters is avoiding that the apparently interaction existing between prolamin, and lipids be impaired. Indeed, even in an attempt to add to purified zein part of the initially present lipids did not result in a thermoplastic material having the same beneficial properties as the material obtained by the claimed process. Most surprisingly it has proven that avoiding denaturalisation and trying not to alter the lipid concentration and distribution during extraction and to adjust the parameters during precipitation to selectively eliminate components results in bio thermoplastic materials having characteristics not obtainable so far and this even in an industrial scale.

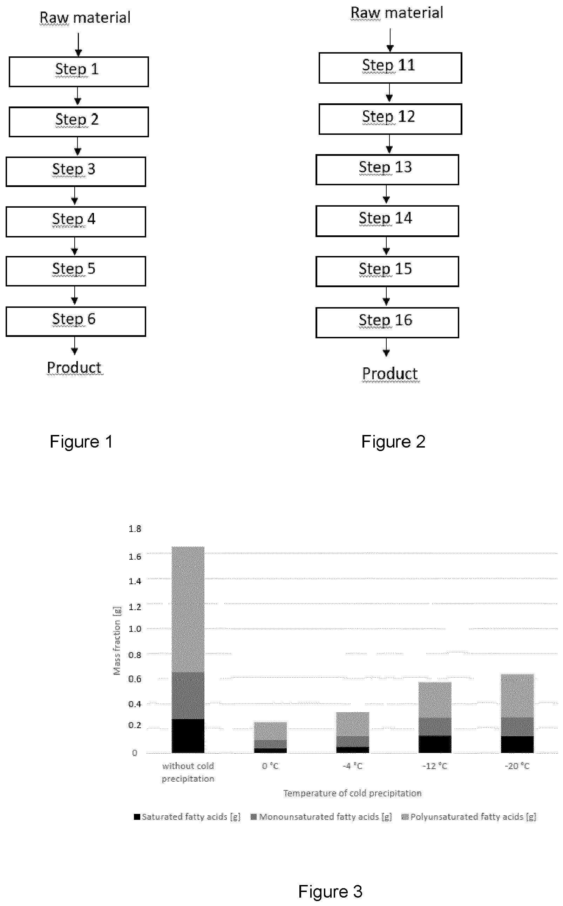

Further embodiments of the present invention are described with reference to the process scheme shown in Fig. 1. Fig. 1 illustrates an integrated process for the production of thermoplastic material for use as a film or as a coating. The process may start with a corn gluten source as the prolamin containing biomass. In the first step S1, the prolamin containing biomass is mixed with a solvent. Preferably, has a dielectric constant of 30 to 42 at 25°C, in the ratio 1:4 to 1:10 substrate/solvent (w/w), for a time of 10 to 180 min.

By combining the corn gluten source with a first liquid phase comprising an organic solvent, solvent-soluble components of the corn gluten source are extracted into the first liquid phase. In the second step 2, the solid is separated from the liquid phase, obtaining a first liquid phase and a first solid phase. The first liquid phase may be separated from the solids (herein referred to as the first solid phase) by centrifugation. The solids may be removed from the process and used as feedstuff for animals or the like. The first liquid phase is further processed.

In step 3, the first liquid phase is cooled down to -15° to -20°, in particular to - 18°C and the precipitated solids, forming the second solid phase, are removed, thereby obtaining the second liquid phase.

Cold precipitation results in formation of solids (herein referred to as the second solid phase) and a liquid phase (herein referred to as the second liquid phase), whereas the second liquid phase is recovered to give a thermoplastic material. For this purpose, the second solid phase and the second liquid may be separated by centrifugation.

In step 4, the second liquid phase is dried, thereby obtaining a powder.

In step 5, the powder can be mixed with additives in an extruder to obtain granulates. The granulates can be processed in a film extrusion or paper co-extrusion to obtain a flexible film or coated paper. It is to be noted that after the recovering step the thermoplastic material can be in the form of a slurry or a powder. The thermoplastic material can subsequently be further processed. The further processing can consist in a transformation to granulates as an intermediate product such as by extrusion. The further processing can include transforming the powder, slurry or granulates by extrusion, die casting, injection molding, spraying etc. to obtain the final product. The need to avoid the addition of water is not needed in the further processing as the thermoplastic material will not be altered unless dissolved again. In other words, if an organic solvent was to be used during further processing, then addition of water should also be avoided.

Fig. 2 illustrates another integrated process for the production of thermoplastic material for use as a film or as a coating.

The process of Figure 2 starts with the same steps as the process of Figure 1. In the first step S11, the prolamin containing biomass is mixed with a solvent. The solvent has a dielectric constant of 30 to 42 (at 25°C), in the ratio 1:4....1:10 substrate/solvent (w/w), for a time of 10 to 180 min. In the second step S 12, the solids are separated from the liquid phase, obtaining a first liquid phase and a first solid phase, and in the third step 13 the first liquid phase is cooled down to -15° to -20°, in particular to -18°C and the precipitated solids are removed (second solid phase), thereby obtaining the second liquid phase.

The second liquid phase is dried (step S14) at temperatures below 80°C, thereby obtaining a powder.

In Step 15, the powder is mixed with a solvent together with additives to obtain a third liquid phase. The solvent has a dielectric constant between 30 and 40 at 25°C:

Finally, in Step 16, the third liquid phase is coated on a flexible surface to obtain a flexible film or a coated paper. This can be done using for example roll-to-roll coating or slot die coating techniques.

In the following, the invention is explained in more detail by means of selected examples.

Example 1:

Corn gluten meal was obtained from a starch production plant. The corn gluten meal was then mixed with an ethanol-mixture with a dielectric constant of 35. The mixture was heated to 50 °C and then stirred at 50°C for two hours. Afterwards, solids were removed without cooling by centrifugation for 5 min at 5000 x g. The recovered first supernatant was cooled to -18 °C and then left at -18 °C for four hours without changing the dielectric constant. The formed precipitated solids were removed by centrifugation at 4 °C for 5 min at 5000 x g. The recovered second supernatant was dried at room temperature, then milled to a fine powder and sieved to < 0,5 mm. The powder was then mixed with 20 wt.-% glycerol, and then extruded to granulates at 100°C. The granulates showed good thermoplastic properties, by having a melt volume rate of 50 ccm / 10 min (5 kg). The granulates could be extruded to form a flexible film with a Young's modulus < 1000 MPa.

Furthermore, the powder was mixed with the 2-fold amount of ethanol- mixture (by weight) and with 20 wt.-% polyols. The obtained solution was stirred for 10 min in a speed mixer at room temperature and then casted on a silicon surface and dried at room temperature to form a 60 μm film. The film showed a good flexibility (18% elongation at break) and was fully translucent.

Example 2:

The process of Example 1 where the second liquid phase was filtered in a membrane filtration at 4 kDa and 7 bar at room temperature until a viscous liquid as the first retentate was formed. The permeate was filtered through a 200 Da membrane at room temperature until a viscous liquid as the second retentate was formed. The first retentate and the second retentate were combined and mixed with 20 wt-% glycerol, then dried at room temperature, then milled to a powder and sieved to < 2 mm, and then extruded to granulates at 140°C. The granulates showed good thermoplastic properties, by having a melt volume rate at 130°C of 78 ccm / 10 min (5 kg). The granulates could be extruded to form a flexible film with a Young's modulus < 1000 MPa.

Furthermore, the powder was mixed with the 2-fold amount of ethanol- mixture (by weight) and with 20 wt.-% polyols. The obtained solution was stirred for 10 min in a speed mixer at room temperature and then casted on a silicon surface and dried at room temperature to form a 60 μm film. The film showed a good flexibility (18% elongation at break) and was fully translucent.

Example 3:

The process of Example 1 where the dielectric constant of the solvent during the extraction was changed to 38, which resulted in the same product quality.

Example 4:

The process of Example 1 where the extraction temperature was changed to 65°C, which resulted in the same product quality.

Example 5:

The process of Example 1 where the second supernatant was dried in a spray dryer at 80°C, which resulted in the same product quality.

Example 6:

The process of Example 1 where the dielectric constant during the extraction was changed to 50, where the resulting product showed no thermoplastic properties and could not be extruded.

Example 7:

The process of Example 1 where the dielectric constant during the precipitation was changed to 60, where the resulting product showed no thermoplastic properties and could not be extruded.

Example 8:

The process of Example 1 where the drying temperature was changed to 110°C, where the resulting product showed no thermoplastic properties and could not be extruded.

Example 9:

The process of Example 1 where the cooling temperature was 10°C, and where the obtained powder was mixed with the 2-fold amount of ethanol- mixture (by weight) and with 20 wt.-% polyols. The obtained solution was stirred for 10 min in a speed mixer at room temperature and then casted on a silicon surface and dried at room temperature to form a 60 $\mu$m film. The film was brittle and opaque.

The cooling temperature of 10°C in Example 9 correspond to final temperature of the second liquid phase.

Fig. 3 illustrates the fraction of saturated, monounsaturated and polyunsaturated fatty acids among the fatty acids of a material produced with no step of precipitating, with the step of precipitating and with a temperature drop during transforming the first liquid phase to the second liquid phase of at least 5°C. Fig. 3 illustrates that a larger temperature drop yields a higher amount of fatty acids in the second solid phase and thus removes a different fraction and a different amount of fatty acids from the first liquid phase. Fig. 3 shows that a larger temperature drop enables to precipitate a larger amount of a first fraction of dissolved components such as fatty acids out of the first liquid phase to obtain the second solid phase.

Fig. 4 shows the tensile strength and the elongation at break of the materials produced with a step of precipitating with a temperature drop during transforming the first liquid phase to the second liquid phase of at least 5°C. Fig. 4 shows that the higher the temperature drop is, the higher the tensile strength is and the lower the elongation at break is.

Fig. 5 shows a curve of the dielectric constant (25°C) as a function of the concentration of ethanol.

Further examples are provided below. The process of producing the materials of examples 10 to 18 below does not necessarily comprise adding additives at a fixed concentration to facilitate the process. The tests were done without precipitation, but precipitation would only improve the results.

The MFI is a measure of the ease of flow of the melt of a thermoplastic material. The MFI is defined as the weight of the material in grams flowing in 10 min through a die of specific diameter and length by a pressure applied by a given weight at a given temperature. The melt flow index test procedure comprises placing the material to be tested in a small tank with a thin tube at the end of the tank, with a diameter of 2.095 mm and a length of 8 mm. The material is heated to a certain temperature and then the upper end of the material is pushed downward by a piston through pressure extrusion. The MFI of raw material is measured in 10 minutes by the weight of the extruded material corresponding to the melt flow index of the material.

An MFI value of 25g / 10 min means that 25g of material is extruded in 10 minutes. The MFI of common plastics ranges from 1 to 45.

In one example, the thermoplastic material X is produced according to the present invention from a biomass. The recovered supernatant is directly applied for recovery of thermoplastic material The produced thermoplastic material X comprises a protein content of 74 to 78 %.

In another example, the thermoplastic material Y is produced according to the present invention from a pre-treated biomass. The recovered supernatant is directly applied for recovery of thermoplastic material. The produced material Y comprises a protein content of 78 to 95 %.

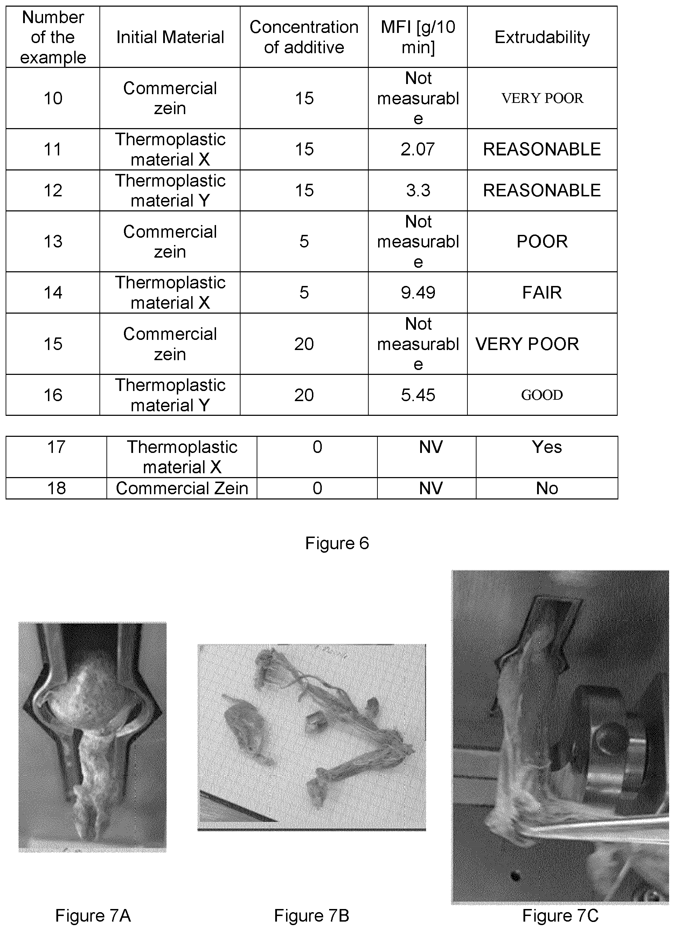

A comparison has further been conducted between the thermoplastic material X, the thermoplastic material Y, both produced according to the present invention and a commercial zein being sold as purified zein. Additives were added to the thermoplastic material X, the thermoplastic material Y and the commercial zein to determine if the increase of the additive amount is followed by an improvement of the thermoplastic behavior of the materials and to compare the processability of the thermoplastic material X, the thermoplastic material Y and the commercial zein. The commercial zein is not a biomass as defined in the present invention. The composition of the thermoplastic material X, the thermoplastic material Y and the commercial zein can be found in Figure 6. The concentrations of additives are chosen with the intent of maintaining the relative amount of the recovered thermoplastic material as high as possible for economic reasons. The concentration of additives in the examples below enables to obtain material with thermoplastic properties that is minimally processable. In the following examples for illustration purpose only, the additives could be among others carboxylic acid (Examples 10, 11, 12, 15 and 16 with carboxylic acid 1 as additive; Examples 13 and 14 with carboxylic acid 2 as additive).

Example 10: Commercial zein + 15 % (w/w) additives (Comparative Example)

The produced material shows a substantial inflating and hardening behavior. The substantial inflating and the hardening behavior occurs before any significant melting process, making the measurement of an MFI value impossible to obtain. The produced material appears sticky, making the cutting of the produced pieces of material difficult. The produced material needed to be forcefully pulled out of the nozzle of the extruder used and shows a fibrillar appearance, as can be seen on Fig. 7A, 7B and 7C. This can be attributed to the beginning of a decomposition process, which impacts the re-meltability of zein, invalidating the possibility of items produced with commercial zein to be remelted and recycled.

The results indicate no suitability of commercial zein for conventional thermoplastic related conversion techniques when mixed with additives at a concentration of 15 % (w/w).

Example 11: thermoplastic material X + 15 % (w/w) additives (Illustrative Example)

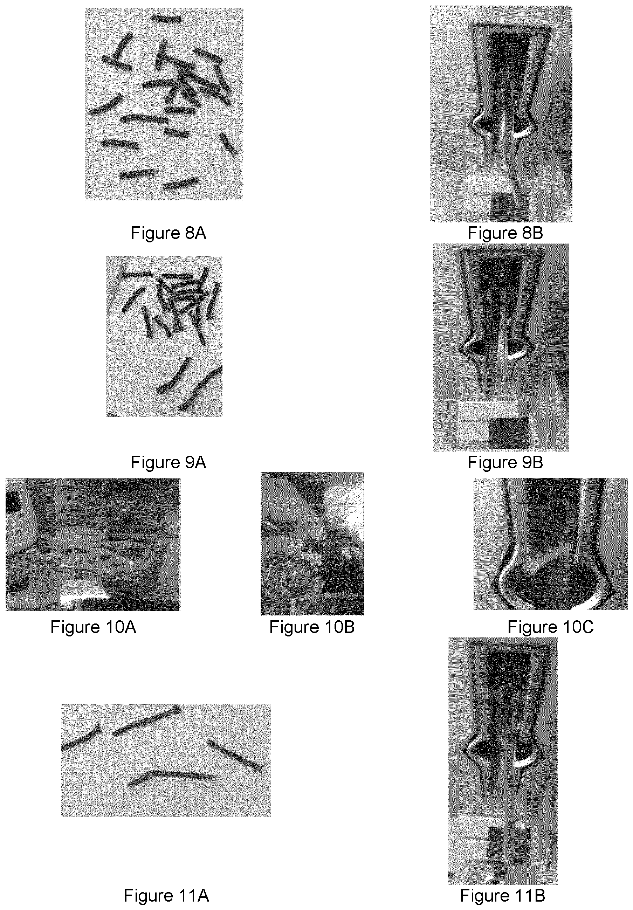

The produced material is extruded with ease and a series of extrudate segments with uniform length can be obtained, as can be seen on Fig. 8A and 8B. This proves the occurrence of a melting process during the measurement and thus that the process enables the obtention of a thermoplastic material. The produced material also shows no sign of decomposition, suggesting the ability of the produced material of Example 11 to be remolten and recycled.

Example 12: thermoplastic material Y + 15 % (w/w) additives (Illustrative Example)

The material is produced from a pre-treated biomass containing prolamins and lipids and is extruded with ease and a series of extrudate segments with uniform length can be obtained, as can be seen on Fig. 9A and 9B. This proves the occurrence of a melting process during the measurement and thus that the process enables the obtention of a thermoplastic material. The produced material also shows no sign of decomposition, suggesting the ability of the produced material of Example 12 to be remolten and recycled. The added additive in example 12 can be seen as a plasticizer or a lubricant in the process.

The results indicate the suitability of the produced material of Example 12 for conventional thermoplastic related conversion techniques when mixed with additives at a concentration of 15 % (w/w).

Example 13: Commercial zein + 5 % (w/w) additives (Comparative Example)

It was possible to forcefully push the produced material out of the nozzle, however the filaments obtained were not homogeneous and extremely brittle, making the measurement of an MFI value impossible to obtain. Moreover, the produced material is inflated during the measurement. Although it is possible to force a filament out of the nozzle, the produced material of Example 13 is so brittle that it is possible to crumble the produced material by touching, as can be seen on Fig. 10A, 10B and 10C.

The results indicate no suitability of the commercial zein for conventional thermoplastic related conversion techniques when mixed with additives at a concentration of 5 % (w/w).

Example 14: thermoplastic material X + 5 % (w/w) additives (Illustrative Example)

The produced material is extruded with ease and a series of extrudate segments with uniform length can be obtained, as can be seen on Fig. 11A and 11B. This proves the occurrence of a melting process during the measurement and thus that the process enables the obtention of a thermoplastic material. The produced material also shows no sign of decomposition, suggesting the ability of the produced material of Example 14 to be remolten and recycled.

The results indicate the suitability of the produced material of Example 14 for conventional thermoplastic related conversion techniques when mixed with additives at a concentration of 20 % (w/w).

Example 15: Commercial zein + 20 % (w/w) additives (Comparative Example)

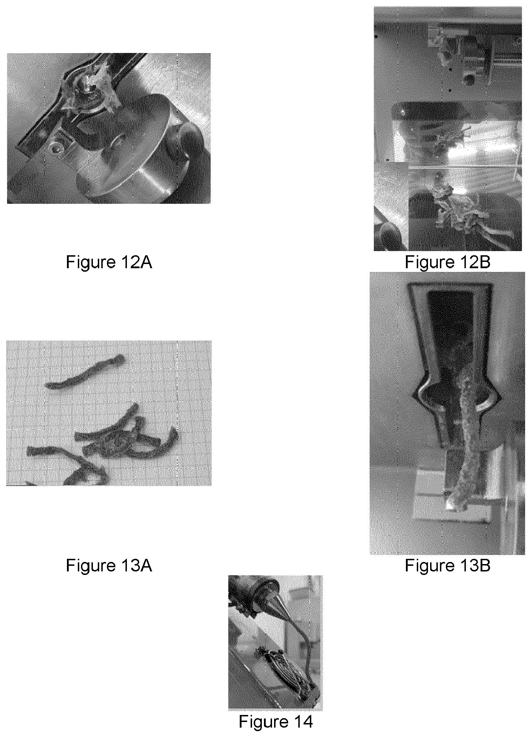

It was not possible to push the sample out of the nozzle, as can be seen on Fig. 12A and 12B. Only a minimal amount was observable from the other end of the measuring tube simply due to the complete filling of such tube, making the measurement of an MFI value impossible to obtain. Moreover, the produced material results in extremely sticky. Similarly to Example 10, also this one needed to be forcefully pulled out of the nozzle and showed a fibrillar appearance.

The results indicate no suitability of the commercial zein for conventional thermoplastic related conversion techniques when mixed with additives at a concentration of 20 % (w/w).

Example 16: thermoplastic material Y + 20 % (w/w) additives (Illustrative Example)

The produced material is extruded with ease and a series of extrudate segments with uniform length can be obtained, as can be seen on Fig. 13A and 13B. This proves the occurrence of a melting process during the measurement and thus that the process enables the obtention of a thermoplastic material. The produced material also shows no sign of decomposition, suggesting the ability of the produced material of Example 16 to be remolten and recycled.

The results indicate the suitability of the produced material of Example 16 for conventional thermoplastic related conversion techniques when mixed with additives at a concentration of 20 % (w/w).

Example 17: thermoplastic material X + 0 % (w/w) additive

The thermoplastic material X was extrudable without the addition of an additive. Fig. 14 shows an extrudate that is soft. Fig. 14 further shows that extrusion is possible and that the process can be processed smoothly. The sample was extruded with ease and a series of extrudate segments with uniform length could be obtained. This proves the occurrence of a melting process during the measurement and thus of thermoplastic behavior. The samples of Example 17 also show no sign of decomposition, suggesting their ability to be remolten and recycled.

The results indicate the suitability of example 17 for any thermoplastic related conversions with no additive.

Example 18: Commercial zein X + 0 % (w/w) additive

In contrast, zein without the addition of plasticizer does not show any extrudability.

The value of MFI and statement of extrudability for each example can be found in Figure 5.

As can be seen from the above results of the melt flow index (MFI) and the figures obtained with different levels and types of additives, products obtained by the process of the present disclosure need significantly lower amounts of plasticizers in contrast to the commercially available zein. Indeed, commercial zein is produced in a process where the first liquid phase is poured into water, changing the dielectric constant to >42, typically in the range of 50 to 75. That causes re-structuring of the proteins with subsequent precipitation, which is unfavorable for the use as thermoplastic product.

**Conclusion**

A comparison of the examples shows that the process according to an embodiment of the present invention significantly improves the thermoplastic characteristics and the suitability for further processing such as by injection moulding as compared to a state of the art process

**Claims**

1. A process for producing a thermoplastic material for use as a film, as a flexible coating, comprising the steps:

i. mixing a biomass containing prolamins, such as a grain source or a water insoluble fraction of a grain, having prolamins and lipids, and an organic solvent to obtain undissolved components and dissolved components comprising dissolved prolamin, lipids, and other dissolved components;

ii. extracting said dissolved components into a first liquid phase and extracting undissolved components in a first solid phase under the following conditions:

a. maintaining temperature T below 80°Celsius, preferably below 75°C, most preferably below 70°C
b. maintaining dielectric constant $\varepsilon_r$ (at 25°C) between 30 and 42
c. maintain pressure level p at below 2 bar
d. performing extraction for no longer than an extraction time te (in min) = ke1*T (in °C) + ke2* $\varepsilon_r$ (at 25°C) + ke3*p (bar absolute), wherein

ke1 is in the range between 0.04 and 1.00
ke2 is in the range between 0.08 and 2.00
ke3 is in the range between 1.70 and 60.00

iii. separating the first solid phase from the first liquid phase
iv. precipitating a first fraction of said dissolved components out of the first liquid phase to obtain a second solid phase and a second liquid phase under the following conditions:

a. a temperature drop during transforming the first liquid phase to the second liquid phase is provided for of at least 5°C, preferably at least 10°C, more preferably at least 15°C, at least 20°C, at least 25°C, at least 30°C, at least 35°C, at least 40°C, and most preferably at least 45°C;
b. maintaining dielectric constant $\varepsilon_r$ (at 25°C) between 30 and 42;
c. maintaining pressure level p at below 2 bar;

iv. separating the second solid phase from the second liquid phase;
v. recovering said thermoplastic material from the <u>second</u> liquid phase by removing organic solvent under the following conditions:

- maintaining temperature of the prolamins below 80°C, preferably below 75°C, most preferably below 70°C;

- maintaining a dielectric constant $\varepsilon_r$ (at 25°C) between 30 and 42
- maintaining a pressure level at below 2 bar;
- performing recovering for no longer than a recovering time t (in min) = kr1 *T (in °C) + kr2* $\varepsilon_r$ (at 25°C) + kr3*p (bar absolute) where

> kr1 is in the range between 0.0004 and 12.0000
> kr2 is in the range between 0.0008 and 7.0000
> kr3 is in the range between 0.0167 and 80000.0000

2. The process according to claim 1, comprising at least partly removing said other dissolved components other than prolamin and lipids from the first liquid phase and/or from the second liquid phase, preferably the removal from the second liquid phase is performed until a powder is obtained.

3. The process of claim 2, wherein the removal comprises filtering, by membrane filtration, the first liquid phase or the second liquid phase, said filtering being performed under the following conditions

> - maintaining temperature below 80°C, preferably below 75°C, most preferably below 70°C, even more preferably below °40C;
> - maintaining dielectric constant between $\varepsilon_r$ (at 25°C) between 30 and 42;
> - maintaining a pressure level below 7 bar.

4. The process according to claim 3, wherein the filtration is a two-stage filtration, wherein the first filter stage is a filtration with a first membrane with a size comprised between 4 and 10 kg/mol and the second filter stage is a filtration with a second membrane with a size comprised between 0.2 and1.0 kg/mol.

5. The process of any of the preceding claims, wherein the prolamins have naturally grown prolamin structures and distributions and the lipids have naturally grown lipid content and distributions.

6. The process of any of the preceding claims, wherein the precipitation step is configured to selectively precipitate larger lipids, like triglycerides, monoglycerides and diglycerides as well as larger waxes and to have free fatty acids and smaller lipid molecules stay in solution.

7. The process of any one of claims 1 to 6, wherein the first liquid phase and/or the second liquid phase is treated to increase viscosity.

8. The process of any of the preceding claims, comprising the step of adding additives before the step of recovering the thermoplastic material, preferably before the drying/recovering, wherein the additives are chosen among carboxylic acids, fatty acids, polyols, phenolic compounds, aromatic compounds, sugars, or others.

9. The process according to the preceding claim, in which the content of lipid in the biomass containing prolamins, such as a grain corn gluten meal is between 1% and 10%, preferably between 4% and 7% in the corn gluten, between 5% and 20%, preferably between 13% and 17 % in the first liquid phase, between 1% and 15%, preferably 8% and 12% in the second liquid phase.

10. The process of any of the preceding claims, wherein ratios among the lipids/fatty acids are maintained throughout the entire process at the following levels in wt-% of total lipids: free fatty acids / monoglycerides / diglycerides / triglycerides First liquid phase:

> 91+/-6    /
> 3+/-2    /
> 5+/-3    /
> 1+/-1

Second liquid phase:

> 95 +/-3    /
> 2 +/-1    /
> 3 +/-2    /
> 0

11. The process of any of the preceding claims, wherein a protein content being defined as the ratio between the mass of the protein and the total dry mass is kept at a level below 95 wt.% throughout the entire process.

12. The process of any of the preceding claims, wherein the precipitation step is configured to selectively rather precipitate larger prolamin by keeping the dielectric constant between 30 and 42 at 25°C, in particular prolamin having beta sheets in the secondary structure rather than prolamin having alpha helices in the secondary structure.

13. The process of any of the preceding claims, wherein a ratio between alpha helix and beta-sheet in the secondary structure is maintained throughout the entire process, preferably at least at the ratio between alpha helix and beta-sheet in the secondary structure of the corn gluten meal, most preferably at a level of at least 1.6.

14. The process of any of the preceding claims, wherein the precipitation comprises adding additives.

15. A process of forming a flexible film, or a coating on a flexible material such as paper, comprising the steps of providing a thermoplastic material by a process of any of claims 1 to 13 and forming the flexible film or the coating

   wherein the flexible film is obtained by at least one of wet casting or extrusion casting *and/or* wherein the coating is obtained by at least one of wet casting on paper by roll-to-roll coating or slot die coating or extrusion on a support such as paper.

16. A thermoplastic product obtained from biomass containing prolamins such as from a grain source or a water insoluble fraction of a grain having prolamins and lipids, in particular resulting from a process according to any of claims 1 to 15, yielding a melt volume rate of between 2 and 200 cm3/10 min (5kg, at 100... 150°C).

17. Use of a thermoplastic product obtained from obtained from biomass containing prolamins such as from a grain source or a water insoluble fraction of a grain having prolamins and lipids, in particular product according to claim 16, and/or resulting from a process according to any of claims 1 to 15 as a film or as a coating on a flexible support, in particular a paper-coating.

Figure 1

Figure 2

Figure 3

Figure 4

Figure 5

| Number of the example | Initial Material | Concentration of additive | MFI [g/10 min] | Extrudability |
|---|---|---|---|---|
| 10 | Commercial zein | 15 | Not measurable | VERY POOR |
| 11 | Thermoplastic material X | 15 | 2.07 | REASONABLE |
| 12 | Thermoplastic material Y | 15 | 3.3 | REASONABLE |
| 13 | Commercial zein | 5 | Not measurable | POOR |
| 14 | Thermoplastic material X | 5 | 9.49 | FAIR |
| 15 | Commercial zein | 20 | Not measurable | VERY POOR |
| 16 | Thermoplastic material Y | 20 | 5.45 | GOOD |

| 17 | Thermoplastic material X | 0 | NV | Yes |
|---|---|---|---|---|
| 18 | Commercial Zein | 0 | NV | No |

Figure 6

Figure 7A

Figure 7B

Figure 7C

Figure 8A

Figure 8B

Figure 9A

Figure 9B

Figure 10A

Figure 10B

Figure 10C

Figure 11A

Figure 11B

Figure 12A

Figure 12B

Figure 13A

Figure 13B

Figure 14

## EUROPEAN SEARCH REPORT

Europäisches
Patentamt
European
Patent Office
Office européen
des brevets

**Application Number**

EP 22 21 2643

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/83597 A2 (UNIV ILLINOIS [US]) 8 November 2001 (2001-11-08) * page 2, lines 21-33 * * page 3, lines 1-6 * * page 9, line 25 – page 10, line 3 * * page 16, line 5 – page 17, line 3 * * page 17, lines 14-23 * * page 18, lines 14-27 * * page 20, lines 7-14 * * page 22, lines 9-21 * ----- | 1-17 | INV. C08H1/00 C08J5/18 C08L89/00 C08K5/053 |
| X | GHANBARZADEH, B. , OROMIEHI, A.R.: "Thermal and mechanical behavior of laminated protein films", JOURNAL OF FOOD ENGINEERING, vol. 90, no. 4, 1 February 2009 (2009-02-01), pages 517-524, XP025504900, AMSTERDAM, NL ISSN: 0260-8774, DOI: 10.1016/j.jfoodeng.2008.07.018 * abstract * * Right column, first full paragraph; page 517 * * 2.2 Preparation of laminated films; page 518 * * page 520; table 1 * * page 522; table 3 * * 4. Conclusion; page 523 * ----- -/-- | 16,17 | TECHNICAL FIELDS SEARCHED (IPC) C08H C08J C08L C08K |

The present search report has been drawn up for all claims

| Place of search | Date of completion of the search | Examiner |
|---|---|---|
| Munich | 13 April 2023 | Lartigue, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 22 21 2643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Roberto A. Buffo, Jung H. Han: "Solids separation processes" In: Han, Jung H.: "Innovations in Food Packaging", 1 January 2005 (2005-01-01), Elsevier, Amsterdam, NL, XP008163055, ISBN: 0-12-311632-5 pages 277-300, DOI: 10.1016/B978-012311632-1/50049-8, * First paragraph; page 278 * * "Coatings" and "Films"; page 278 * * First paragraph and "Applications"; page 280 * * "Formation of wheat gluten film"; page 285 * | 16,17 | |
| A | M.J. Lewis: "Solids separation processes" In: "Separation Processes in the Food and Biotechnology Industries", 1 January 1996 (1996-01-01), Elsevier, XP055173942, ISBN: 978-1-85-573287-2 pages 243-286, DOI: 10.1533/9781855736573.243, * page 244; table 9.1 * * page 273; table 9.5 * * page 274; table 9.5.1 * | 1-16 | TECHNICAL FIELDS SEARCHED (IPC) |

The present search report has been drawn up for all claims

| Place of search | Date of completion of the search | Examiner |
|---|---|---|
| Munich | 13 April 2023 | Lartigue, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 2643

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2023

| Patent document cited in search report | | Publication date | Patent family member(s) | | Publication date |
|---|---|---|---|---|---|
| WO 0183597 | A2 | 08-11-2001 | AU | 5175701 A | 12-11-2001 |
| | | | CA | 2407729 A1 | 08-11-2001 |
| | | | US | 6635206 B1 | 21-10-2003 |
| | | | US | 2004056388 A1 | 25-03-2004 |
| | | | WO | 0183597 A2 | 08-11-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- LU 500975
- WO 2016154441 A
- EP 0648078 B1
- US 6635206 B1
- CN 101024725 B
- US 5585060 A
- US 5324351 A
- US 2285758 A
- CN 104397828 B
- CN 1302550 A
- CN 103382255 B
- GB 492599 A
- WO 0183597 A

**Non-patent literature cited in the description**

- Zein: the industrial protein from corn. **SHUKLA et al.** INDUSTRIAL CROPS AND PRODUCTS. ELSEVIER, 01 January 2001, vol. 13, 171-192
- **M.J. LEWIS.** Solids separation processes. *Separation Processes in the Food and Biotechnology Industries,* 01 January 1996
- Thermal and mechanical behavior of laminated protein films. **GHANBARZADEHB et al.** JOURNAL OF FOOD ENGINEERING. ELSEVIER, 01 February 2009, vol. 90, 517-524